# EUROPÄISCHE PATENTANMELDUNG

(11) **EP 3 324 532 A1**
(43) Veröffentlichungstag der Anmeldung: **23.05.2018**
(21) Anmeldenummer: 16199846.3
(22) Anmeldetag: 21.11.2016
(51) Int. Cl.: H02M 7/487

(54) **DREIPUNKT-WECHSELRICHTER**

(71) Anmelder: Siemens Aktiengesellschaft, 80333 München (DE)
(72) Erfinder: Kraus, Ludwig, 94099 Ruhstorf (DE)

(57) **Zusammenfassung**

Die Erfindung betrifft einen Dreipunkt-Wechselrichter (1) zur Umwandlung einer Gleichspannung in eine Wechselspannung. Der Dreipunkt-Wechselrichter (1) umfasst einen Gleichspannungskreis (3) und für jede Phase der Wechselspannung ein Halbbrückenschaltungspaar. Der Gleichspannungskreis (3) umfasst eine Hochpotentialschiene (5), eine Niederpotentialschiene (7) und eine Zwischenpotentialschiene (9). Jedes Halbbrückenschaltungspaar umfasst eine erste Halbbrückenschaltung (15) und eine zweite Halbbrückenschaltung (17), die jeweils zwischen die Hochpotentialschiene (5) und die Niederpotentialschiene (7) geschaltet sind. Die erste Halbbrückenschaltung (15) ist zur Führung eines Phasenstroms in einer ersten Stromrichtung (21) ausgelegt und die zweite Halbbrückenschaltung (17) ist zur Führung des Phasenstroms in einer der ersten Stromrichtung (21) entgegengesetzten zweiten Stromrichtung (23) ausgelegt.

## Beschreibung

Die Erfindung betrifft einen Dreipunkt-Wechselrichter zur Umwandlung einer Gleichspannung in eine Wechselspannung.

Unter einem Dreipunkt-Wechselrichter, der auch als Drei-Level-Wechselrichter bezeichnet wird, wird ein Wechselrichter verstanden, der gepulste Phasenspannungen erzeugt, die jeweils drei Spannungsniveaus annehmen können. Dazu weist der Drei-Level-Wechselrichter für jede Phase der Wechselspannung Schalter auf, durch die zwischen den drei Spannungsniveaus umgeschaltet wird. Die erzeugte Wechselspannung ergibt sich als gleitender zeitlicher Mittelwert aus den wechselnden Spannungsniveaus. Jeder Schalter eines Dreipunkt-Wechselrichters ist häufig als ein Bipolartransistor mit isolierter Gate-Elektrode (IGBT = Insulated-Gate Bipolar Transistor) ausgebildet. Da ein IGBT nicht rückwärtsleitend ist, wird als Schutz gegen eine Rückwärtsspannung am IGBT eine Inversdiode parallel zu dem IGBT geschaltet, die gleichzeitig als Freilaufdiode eines anderen IGBT verwendet werden kann. Für möglichst kleine Schaltverluste sind schnelle Umschaltungen zwischen den Spannungsniveaus erforderlich. Dabei können hohe Überspannungen nur durch einen induktivitätsarmen Aufbau der IGBT und Freilaufdioden vermieden werden, der wiederum die Anordnung der IGBT und Freilaufdioden auf einer möglichst kleinen Fläche erfordert. Da Dreipunkt-Wechselrichter aufgrund ihrer drei Spannungsniveaus pro Phase eine höhere Anzahl von IGBT und Freilaufdioden als Zweipunkt-Wechselrichter aufweisen und die IGBT und Freilaufdioden nur nebeneinander angeordnet werden können, ist eine niederinduktive Anordnung der IGBT und Freilaufdioden eines Dreipunkt-Wechselrichters schwieriger als bei einem Zweipunkt-Wechselrichter.

Der Erfindung liegt die Aufgabe zugrunde, einen insbesondere hinsichtlich des induktivitätsarmen Aufbaus verbesserten Dreipunkt-Wechselrichter anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßer Dreipunkt-Wechselrichter zur Umwandlung einer Gleichspannung in eine Wechselspannung umfasst einen Gleichspannungskreis und für jede Phase der Wechselspannung ein Halbbrückenschaltungspaar. Der Gleichspannungskreis umfasst eine auf einem Hochpotential liegende Hochpotentialschiene und eine auf einem Niederpotential liegende Niederpotentialschiene, zwischen denen die Gleichspannung anliegt, und eine Zwischenpotentialschiene, die auf einem Zwischenpotential liegt, das zwischen dem Hochpotential und dem Niederpotential liegt. Jedes Halbbrückenschaltungspaar umfasst eine erste Halbbrückenschaltung und eine zweite Halbbrückenschaltung, die jeweils zwischen die Hochpotentialschiene und die Niederpotentialschiene geschaltet sind und wechselspannungsseitig einen Mittelabgriff aufweisen. Die erste Halbbrückenschaltung ist zur Führung eines Phasenstroms in einer ersten Stromrichtung ausgelegt und die zweite Halbbrückenschaltung ist zur Führung des Phasenstroms in einer der ersten Stromrichtung entgegengesetzten zweiten Stromrichtung ausgelegt.

Die Erfindung nutzt aus, dass für einen induktivitätsarmen Aufbau eines Wechselrichters nur diejenigen Komponenten des Wechselrichters räumlich möglichst dicht beieinander angeordnet werden müssen, zwischen denen eine Kommutierung erfolgt. Dies sind Komponenten für jeweils dieselbe Stromrichtung einer Phase der Wechselspannung. Daher sieht die Erfindung für jede Phase der Wechselspannung ein Halbbrückenschaltungspaar zweier Halbbrückenschaltungen vor, die jeweils für eine Stromrichtung ausgelegt sind. Dadurch können jeweils für eine Stromrichtung einer Phase benötigte Komponenten räumlich benachbart und somit niederinduktiv angeordnet werden, so dass die Schaltgeschwindigkeit der Komponenten nicht aufgrund von Überspannungen reduziert werden muss, die bei einer räumlich ungünstigen Anordnung der Komponenten bei hohen Schaltgeschwindigkeiten induktiv erzeugt werden würden, und die volle Schaltgeschwindigkeit der Komponenten genutzt werden kann.

Eine Ausgestaltung der Erfindung sieht vor, dass jede erste Halbbrückenschaltung zwischen ihrem Mittelabgriff und der Hochpotentialschiene lediglich eine erste Diode mit einer hochpotentialseitigen Kathode aufweist und jede zweite Halbbrückenschaltung zwischen ihrem Mittelabgriff und der Niederpotentialschiene lediglich eine zweite Diode mit einer niederpotentialseitigen Anode aufweist.

Die Anordnung jeweils nur einer einzigen Diode zwischen dem Mittelabgriff einer Halbbrückenschaltung und entweder der Hochpotentialschiene oder der Niederpotentialschiene (in Abhängigkeit von der Stromrichtung) hat gegenüber einer Anordnung zweier Dioden auf jeder Seite des Mittelabgriffs wie bei herkömmlichen Dreipunkt-Wechselrichtern des so genannten I-Typs den Vorteil, dass eine Diode mit einer größeren Nennspannung weniger Bodenfläche benötigt als zwei Dioden mit niedrigerer Nennspannung. Der dadurch eingesparte Platz kann unterschiedlich genutzt werden. Beispielsweise können die Herstellungskosten des Dreipunkt-Wechselrichters durch eine Reduktion der Chipfläche reduziert werden. Alternativ können bei ungeänderter Chipfläche alle Komponenten vergrößert werden, so dass sie für höhere Nennströme ausgelegt sind. Oder es können bei ungeänderter Chipfläche nur größere Dioden eingesetzt werden, die für einen höheren Nennstrom ausgelegt sind, wodurch das Grenzlastintegral der Dioden und damit die Robustheit des Dreipunkt-Wechselrichters vergrößert werden und der Verlauf eines Maximalstroms in Abhängigkeit von dem Phasenwinkel verbessert werden kann.

Ein erstes Ausführungsbeispiel der Erfindung sieht vor, dass jede erste Halbbrückenschaltung zwischen ihrem Mittelabgriff und der Niederpotentialschiene eine Halbbrücke mit einem niederpotentialseitigen ersten Halbleiterschalter, einem mittelabgriffseitigen zweiten Halbleiterschalter und einem mit der Zwischenpotentialschiene verbundenen ersten Brückenzweig aufweist und in dem ersten Brückenzweig eine dritte Diode mit einer zwischenpotentialseitigen Kathode angeordnet ist. Dieses Ausführungsbeispiel eines Dreipunkt-Wechselrichters entspricht hinsichtlich der Ausgestaltung der ersten Halbbrückenschaltung der Topologie eines Dreipunkt-Wechselrichters des I-Typs und verbessert damit einen derartigen Dreipunkt-Wechselrichter.

Eine Weitergestaltung des ersten Ausführungsbeispiels der Erfindung sieht vor, dass zu dem zweiten Halbleiterschalter jeder ersten Halbbrückenschaltung eine Inversdiode mit einer mittelabgriffseitigen Kathode parallel geschaltet ist. Die Inversdiode verhindert vorteilhaft, dass sich durch einen Rückstrom von der dritten Diode eine Rückwärtsspannung an dem zweiten Halbleiterschalter aufbaut.

Eine weitere Weitergestaltung des ersten Ausführungsbeispiels der Erfindung sieht vor, dass jede zweite Halbbrückenschaltung zwischen ihrem Mittelabgriff und der Hochpotentialschiene eine Halbbrücke mit einem hochpotentialseitigen dritten Halbleiterschalter, einem mittelabgriffseitigen vierten Halbleiterschalter und einem mit der Zwischenpotentialschiene verbundenen zweiten Brückenzweig aufweist und in dem zweiten Brückenzweig eine vierte Diode mit einer zwischenpotentialseitigen Anode angeordnet ist. Diese Weitergestaltung bildet auch die zweite Halbbrückenschaltung entsprechend der Topologie eines Dreipunkt-Wechselrichters des I-Typs aus und verbessert damit einen derartigen Dreipunkt-Wechselrichter weiter. Vorzugsweise ist dabei zu dem vierten Halbleiterschalter jeder zweiten Halbbrückenschaltung eine Inversdiode mit einer mittelabgriffseitigen Anode parallel geschaltet. Die Inversdiode verhindert vorteilhaft, dass sich durch einen Rückstrom von der vierten Diode eine Rückwärtsspannung an dem vierten Halbleiterschalter aufbaut.

Ein zweites Ausführungsbeispiel der Erfindung sieht vor, dass jede erste Halbbrückenschaltung zwischen ihrem Mittelabgriff und der Niederpotentialschiene einen ersten Halbleiterschalter aufweist, und dass die Zwischenpotentialschiene mit dem Mittelabgriff jeder ersten Halbbrückenschaltung über eine dritte Diode mit einer zwischenpotentialseitigen Kathode und einen zu der dritten Diode in Reihe geschalteten zweiten Halbleiterschalter verbunden ist. Dieses Ausführungsbeispiel eines Dreipunkt-Wechselrichters entspricht hinsichtlich der Ausgestaltung der ersten Halbbrückenschaltung der Topologie eines Dreipunkt-Wechselrichters des so genannten T-Typs und verbessert damit einen derartigen Dreipunkt-Wechselrichter.

Eine Weitergestaltung des zweiten Ausführungsbeispiels der Erfindung sieht vor, dass zu dem zweiten Halbleiterschalter jeder ersten Halbbrückenschaltung eine Inversdiode mit einer mittelabgriffseitigen Kathode parallel geschaltet ist. Wie bei dem ersten Ausführungsbeispiel verhindert die Inversdiode vorteilhaft, dass sich durch einen Rückstrom von der dritten Diode eine Rückwärtsspannung an dem zweiten Halbleiterschalter aufbaut.

Eine weitere Weitergestaltung des zweiten Ausführungsbeispiels der Erfindung sieht vor, dass jede zweite Halbbrückenschaltung zwischen ihrem Mittelabgriff und der Hochpotentialschiene einen dritten Halbleiterschalter aufweist, und dass die Zwischenpotentialschiene mit dem Mittelabgriff jeder zweiten Halbbrückenschaltung über einen vierten Halbleiterschalter und eine zu dem vierten Halbleiterschalter in Reihe geschaltete vierte Diode mit einer mittelabgriffseitigen Kathode verbunden ist. Diese Weitergestaltung bildet auch die zweite Halbbrückenschaltung entsprechend der Topologie eines Dreipunkt-Wechselrichters des T-Typs aus und verbessert damit einen derartigen Dreipunkt-Wechselrichter weiter. Vorzugsweise ist dabei zu dem vierten Halbleiterschalter jeder zweiten Halbbrückenschaltung eine Inversdiode mit einer mittelabgriffseitigen Anode parallel geschaltet. Die Inversdiode verhindert wiederum vorteilhaft, dass sich durch einen Rückstrom von der vierten Diode eine Rückwärtsspannung an dem vierten Halbleiterschalter aufbaut.

Eine weitere Ausgestaltung der Erfindung sieht vor, dass jeder Halbleiterschalter als ein Bipolartransistor mit isolierter Gate-Elektrode ausgebildet ist. Bipolartransistoren mit isolierter Gate-Elektrode eignen sich als Halbleiterschalter in Wechselrichtern, weil sie über Vorwärts-Sperrspannung verfügen und hohe Ströme schalten können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein erstes Ausführungsbeispiel eines Dreipunkt-Wechselrichters, und
- FIG 2: ein zweites Ausführungsbeispiel eines Dreipunkt-Wechselrichters.

Einander entsprechende Teile sind in den Figuren mit denselben Bezugszeichen versehen.

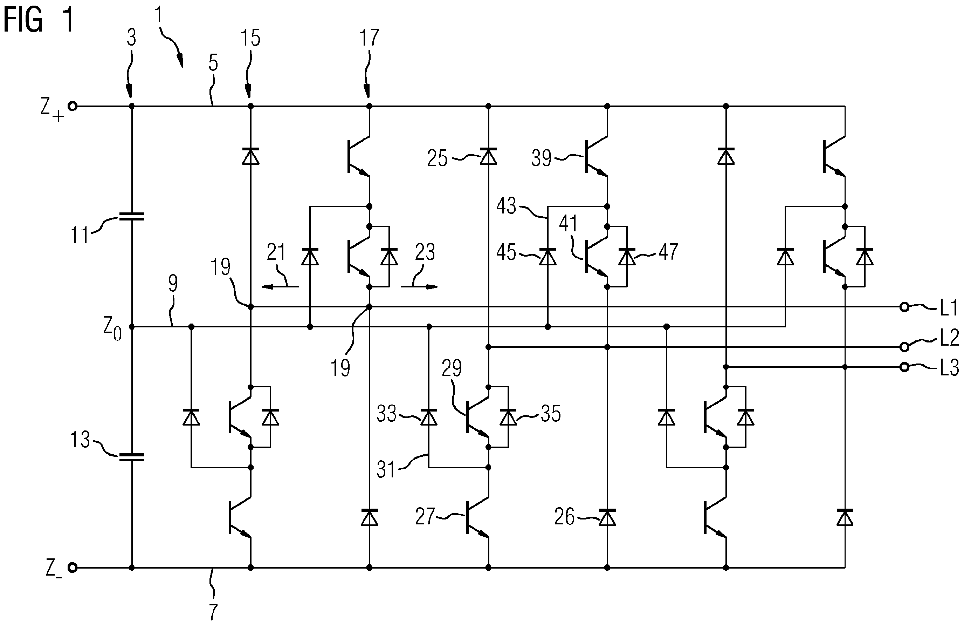

FIG 1 zeigt einen Schaltplan eines ersten Ausführungsbeispiels eines Dreipunkt-Wechselrichters 1 zur Umwandlung einer Gleichspannung in eine dreiphasige Wechselspannung.

Der Dreipunkt-Wechselrichter 1 umfasst einen Gleichspannungskreis 3 mit einer auf einem Hochpotential Z₊ liegenden Hochpotentialschiene 5 und einer auf einem Niederpotential Z₋ liegenden Niederpotentialschiene 7, zwischen denen die Gleichspannung anliegt, und einer Zwischenpotentialschiene 9, die auf einem Zwischenpotential Z₀ liegt, das zwischen dem Hochpotential Z₊ und dem Niederpotential Z- liegt, und mit der Hochpotentialschiene 5 über einen ersten Gleichspannungskreiskondensator 11 und mit der Niederpotentialschiene 7 über einen zweiten Gleichspannungskreiskondensator 13 verbunden ist.

Ferner umfasst der Dreipunkt-Wechselrichter 1 für jede Phase der Wechselspannung ein Halbbrückenschaltungspaar mit einer ersten Halbbrückenschaltung 15 und einer zweiten Halbbrückenschaltung 17, die jeweils zwischen die Hochpotentialschiene 5 und die Niederpotentialschiene 7 geschaltet sind und wechselspannungsseitig einen Mittelabgriff 19 aufweisen, der mit einer Anschlussklemme L1, L2, L3 der jeweiligen Phase des Wechselstroms verbunden ist.

Jede erste Halbbrückenschaltung 15 ist zur Führung eines Phasenstroms der jeweiligen Phase in einer ersten Stromrichtung 21 ausgelegt. Jede zweite Halbbrückenschaltung 17 ist zur Führung des Phasenstroms in einer der ersten Stromrichtung 21 entgegengesetzten zweiten Stromrichtung 23 ausgelegt.

Jede erste Halbbrückenschaltung 15 weist zwischen ihrem Mittelabgriff 19 und der Hochpotentialschiene 5 lediglich eine erste Diode 25 mit einer hochpotentialseitigen Kathode auf.

Jede zweite Halbbrückenschaltung 17 weist zwischen ihrem Mittelabgriff 19 und der Niederpotentialschiene 7 lediglich eine zweite Diode 26 mit einer niederpotentialseitigen Anode auf.

Jede erste Halbbrückenschaltung 15 weist zwischen ihrem Mittelabgriff 19 und der Niederpotentialschiene 7 eine Halbbrücke mit einem niederpotentialseitigen ersten Halbleiterschalter 27, einem mittelabgriffseitigen zweiten Halbleiterschalter 29 und einem mit der Zwischenpotentialschiene 9 verbundenen ersten Brückenzweig 31 auf. In dem ersten Brückenzweig 31 ist eine dritte Diode 33 mit einer zwischenpotentialseitigen Kathode angeordnet. Zu dem zweiten Halbleiterschalter 29 jeder ersten Halbbrückenschaltung 15 ist eine erste Inversdiode 35 mit einer mittelabgriffseitigen Kathode parallel geschaltet.

Jede zweite Halbbrückenschaltung 17 weist zwischen ihrem Mittelabgriff 19 und der Hochpotentialschiene 5 eine Halbbrücke 37 mit einem hochpotentialseitigen dritten Halbleiterschalter 39, einem mittelabgriffseitigen vierten Halbleiterschalter 41 und einem mit der Zwischenpotentialschiene 9 verbundenen zweiten Brückenzweig 43 auf. In dem zweiten Brückenzweig 43 ist eine vierte Diode 45 mit einer zwischenpotentialseitigen Anode angeordnet. Zu dem vierten Halbleiterschalter 41 jeder zweiten Halbbrückenschaltung 17 ist eine zweite Inversdiode 47 mit einer mittelabgriffseitigen Anode parallel geschaltet.

Jeder Halbleiterschalter 27, 29, 39, 41 ist als ein Bipolartransistor mit isolierter Gate-Elektrode ausgebildet. Jede erste Diode 25 und jede zweite Diode 26 ist für die volle Gleichspannung des Gleichspannungskreises 3 ausgelegt. Jede zu einem zweiten Halbleiterschalter 29 einer ersten Halbbrückenschaltung 15 parallel geschaltete erste Inversdiode 35 verhindert, dass sich durch einen Rückstrom von der dritten Diode 33 dieser ersten Halbbrückenschaltung 15 eine Rückwärtsspannung an dem zweiten Halbleiterschalter 29 aufbaut. Entsprechend verhindert jede zu einem vierten Halbleiterschalter 41 einer zweiten Halbbrückenschaltung 17 parallel geschaltete zweite Inversdiode 47, dass sich durch einen Rückstrom von der vierten Diode 45 dieser zweiten Halbbrückenschaltung 17 eine Rückwärtsspannung an dem vierten Halbleiterschalter 41 aufbaut. Daher brauchen die Inversdioden 35, 47 nur für den jeweiligen Rückstrom ausgelegt werden und können entsprechend klein gewählt werden.

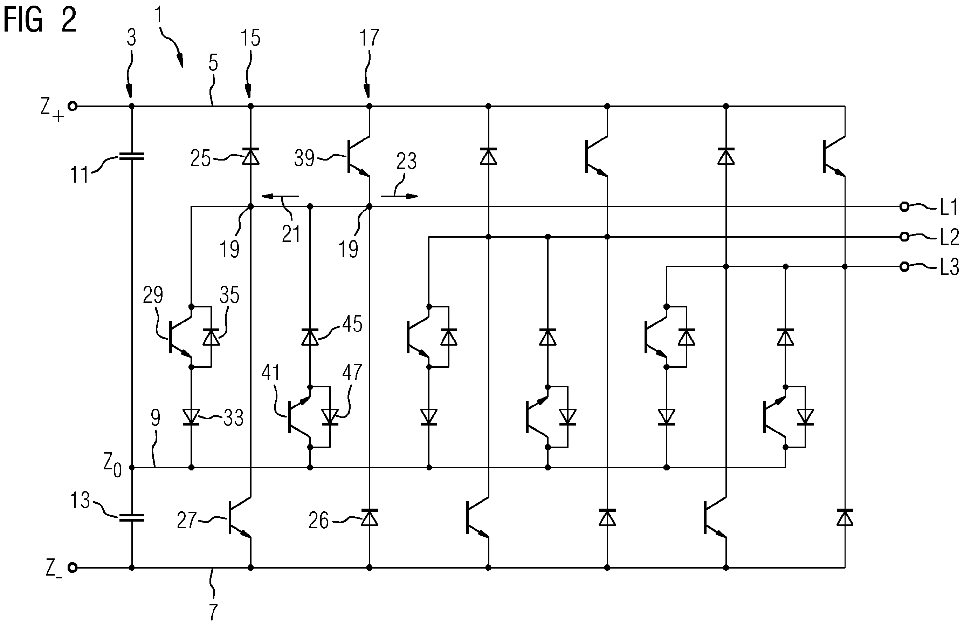

Figur 2 zeigt einen Schaltplan eines zweiten Ausführungsbeispiels eines Dreipunkt-Wechselrichters 1 zur Umwandlung einer Gleichspannung in eine dreiphasige Wechselspannung.

Der Dreipunkt-Wechselrichter 1 umfasst einen Gleichspannungskreis 3, der wie bei dem in FIG 1 gezeigten ersten Ausführungsbeispiel ausgebildet ist. Ferner umfasst der Dreipunkt-Wechselrichter 1 wie das in FIG 1 gezeigte erste Ausführungsbeispiel für jede Phase der Wechselspannung ein Halbbrückenschaltungspaar mit einer ersten Halbbrückenschaltung 15 und einer zweiten Halbbrückenschaltung 17, die jeweils zwischen die Hochpotentialschiene 5 und die Niederpotentialschiene 7 des Gleichspannungskreises 3 geschaltet sind und wechselspannungsseitig einen Mittelabgriff 19 aufweisen, der mit einer Anschlussklemme L1, L2, L3 der jeweiligen Phase des Wechselstroms verbunden ist. Ebenfalls wie bei dem in FIG 1 gezeigten ersten Ausführungsbeispiel ist jede erste Halbbrückenschaltung 15 zur Führung eines Phasenstroms in einer ersten Stromrichtung 21 ausgelegt und jede zweite Halbbrückenschaltung 17 ist zur Führung des Phasenstroms in einer der ersten Stromrichtung 21 entgegengesetzten zweiten Stromrichtung 23 ausgelegt. Wiederum weist jede erste Halbbrückenschaltung 15 zwischen ihrem Mittelabgriff 19 und der Hochpotentialschiene 5 lediglich eine erste Diode 25 mit einer hochpotentialseitigen Kathode auf, und jede zweite Halbbrückenschaltung 17 weist zwischen ihrem Mittelabgriff 19 und der Niederpotentialschiene 7 lediglich eine zweite Diode 26 mit einer niederpotentialseitigen Anode auf. Das in FIG 2 gezeigte zweite Ausführungsbeispiel unterscheidet sich jedoch von dem in FIG 1 dargestellten ersten Ausführungsbeispiel durch die weitere Ausgestaltung der Halbbrückenschaltungen 15, 17.

Jede erste Halbbrückenschaltung 15 weist zwischen ihrem Mittelabgriff 19 und der Niederpotentialschiene 7 einen ersten Halbleiterschalter 27 auf. Die Zwischenpotentialschiene 9 des Gleichspannungskreises 3 ist mit dem Mittelabgriff 19 jeder ersten Halbbrückenschaltung 15 über eine dritte Diode 33 mit einer zwischenpotentialseitigen Kathode und einen zu der dritten Diode 33 in Reihe geschalteten zweiten Halbleiterschalter 29, der zwischen die dritte Diode 33 und den Mittelabgriff 19 der ersten Halbbrückenschaltung 15 geschaltet ist, verbunden. Zu jedem zweiten Halbleiterschalter 29 ist eine erste Inversdiode 35 mit einer zwischenpotentialseitigen Anode parallel geschaltet.

Jede zweite Halbbrückenschaltung 17 weist zwischen ihrem Mittelabgriff 19 und der Hochpotentialschiene 5 einen dritten Halbleiterschalter 39 auf. Die Zwischenpotentialschiene 9 ist mit dem Mittelabgriff 19 jeder zweiten Halbbrückenschaltung 17 über einen vierten Halbleiterschalter 41 und eine zu dem vierten Halbleiterschalter 41 in Reihe geschaltete vierte Diode 45 mit einer mittelabgriffseitigen Kathode verbunden, wobei die vierte Diode 45 zwischen den vierten Halbleiterschalter 41 und den Mittelabgriff 19 der zweiten Halbbrückenschaltung 17 geschaltet ist. Zu dem vierten Halbleiterschalter 41 jeder zweiten Halbbrückenschaltung 17 ist eine zweite Inversdiode 47 mit einer zwischenpotentialseitigen Kathode parallel geschaltet.

Wie in dem in FIG 1 gezeigten ersten Ausführungsbeispiel ist jeder Halbleiterschalter 27, 29, 39, 41 als ein Bipolartransistor mit isolierter Gate-Elektrode ausgebildet. Ebenfalls wie in dem in FIG 1 gezeigten ersten Ausführungsbeispiel brauchen die Inversdioden 35, 47 nur für einen Rückstrom von einer dritten Diode 33 bzw. einer vierten Diode 45 ausgelegt werden und können entsprechend klein gewählt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dreipunkt-Wechselrichter (1) zur Umwandlung einer Gleichspannung in eine Wechselspannung, der Dreipunkt-Wechselrichter (1) umfassend
- einen Gleichspannungskreis (3) mit einer auf einem Hochpotential (Z₊) liegenden Hochpotentialschiene (5) und einer auf einem Niederpotential (Z₋) liegenden Niederpotentialschiene (7), zwischen denen die Gleichspannung anliegt, und einer Zwischenpotentialschiene (9), die auf einem Zwischenpotential (Z₀) liegt, das zwischen dem Hochpotential (Z₊) und dem Niederpotential (Z₋) liegt,
- und für jede Phase der Wechselspannung ein Halbbrückenschaltungspaar mit einer ersten Halbbrückenschaltung (15) und einer zweiten Halbbrückenschaltung (17), die jeweils zwischen die Hochpotentialschiene (5) und die Niederpotentialschiene (7) geschaltet sind und wechselspannungsseitig einen Mittelabgriff (19) aufweisen,
- wobei die erste Halbbrückenschaltung (15) zur Führung eines Phasenstroms in einer ersten Stromrichtung (21) ausgelegt ist und die zweite Halbbrückenschaltung (17) zur Führung des Phasenstroms in einer der ersten Stromrichtung (21) entgegengesetzten zweiten Stromrichtung (23) ausgelegt ist.

2. Dreipunkt-Wechselrichter (1) nach Anspruch 1, **da-**
**durch gekennzeichnet**, dass jede erste Halbbrückenschaltung (15) zwischen ihrem Mittelabgriff (19) und der Hochpotentialschiene (5) lediglich eine erste Diode (25) mit einer hochpotentialseitigen Kathode aufweist und jede zweite Halbbrückenschaltung (17) zwischen ihrem Mittelabgriff (19) und der Niederpotentialschiene (7) lediglich eine zweite Diode (26) mit einer niederpotentialseitigen Anode aufweist.

3. Dreipunkt-Wechselrichter (1) nach Anspruch 1 oder 2,
**dadurch gekennzeichnet, dass** jede erste Halbbrückenschaltung (15) zwischen ihrem Mittelabgriff (19) und der Niederpotentialschiene (7) eine Halbbrücke mit einem niederpotentialseitigen ersten Halbleiterschalter (27), einem mittelabgriffseitigen zweiten Halbleiterschalter (29) und einem mit der Zwischenpotentialschiene (9) verbundenen ersten Brückenzweig (31) aufweist und in dem ersten Brückenzweig (31) eine dritte Diode (33) mit einer zwischenpotentialseitigen Kathode angeordnet ist.

4. Dreipunkt-Wechselrichter (1) nach Anspruch 3, **dadurch gekennzeichnet, dass** zu dem zweiten Halbleiterschalter (29) jeder ersten Halbbrückenschaltung (15) eine erste Inversdiode (35) mit einer mittelabgriffseitigen Kathode parallel geschaltet ist.

5. Dreipunkt-Wechselrichter (1) nach Anspruch 3 oder 4,
**dadurch gekennzeichnet, dass** jede zweite Halbbrückenschaltung (17) zwischen ihrem Mittelabgriff (19) und der Hochpotentialschiene (5) eine Halbbrücke mit einem hochpotentialseitigen dritten Halbleiterschalter (39), einem mittelabgriffseitigen vierten Halbleiterschalter (41) und einem mit der Zwischenpotentialschiene (9) verbundenen zweiten Brückenzweig (43) aufweist und in dem zweiten Brückenzweig (43) eine vierte Diode (45) mit einer zwischenpotentialseitigen Anode angeordnet ist.

6. Dreipunkt-Wechselrichter (1) nach Anspruch 5, **dadurch gekennzeichnet, dass** zu dem vierten Halbleiterschalter (41) jeder zweiten Halbbrückenschaltung (17) eine zweite Inversdiode (47) mit einer mittelabgriffseitigen Anode parallel geschaltet ist.

7. Dreipunkt-Wechselrichter (1) nach Anspruch 1 oder 2,
**dadurch gekennzeichnet, dass** jede erste Halbbrückenschaltung (15) zwischen ihrem Mittelabgriff (19) und der Niederpotentialschiene (7) einen ersten Halbleiterschalter (27) aufweist, und dass die Zwischenpotentialschiene (9) mit dem Mittelabgriff (19) jeder ersten Halbbrückenschaltung (15) über eine dritte Diode (33) mit einer zwischenpotentialseitigen Kathode und einen zu der dritten Diode (33) in Reihe geschalteten zweiten Halbleiterschalter (29) verbunden ist.

8. Dreipunkt-Wechselrichter (1) nach Anspruch 7, **dadurch gekennzeichnet, dass** zu dem zweiten Halbleiterschalter (29) jeder ersten Halbbrückenschaltung (15) eine erste Inversdiode (35) mit einer mittelabgriffseitigen Kathode parallel geschaltet ist.

9. Dreipunkt-Wechselrichter (1) nach Anspruch 7 oder 8,
**dadurch gekennzeichnet, dass** jede zweite Halbbrückenschaltung (17) zwischen ihrem Mittelabgriff (19) und der Hochpotentialschiene (5) einen dritten Halbleiterschalter (39) aufweist, und dass die Zwischenpotentialschiene (9) mit dem Mittelabgriff (19) jeder zweiten Halbbrückenschaltung (17) über einen vierten Halbleiterschalter (41) und eine zu dem vierten Halbleiterschalter (41) in Reihe geschaltete vierte Diode (45) mit einer mittelabgriffseitigen Kathode verbunden ist.

10. Dreipunkt-Wechselrichter (1) nach Anspruch 9, **dadurch gekennzeichnet, dass** zu dem vierten Halbleiterschalter (41) jeder zweiten Halbbrückenschaltung (17) eine zweite Inversdiode (47) mit einer zwischenpotentialseitigen Kathode parallel geschaltet ist.

11. Dreipunkt-Wechselrichter (1) nach einem der Ansprüche 3 bis 10, **dadurch gekennzeichnet,**
**dass** jeder Halbleiterschalter (27,29,39,41) als ein Bipolartransistor mit isolierter Gate-Elektrode ausgebildet ist.
